(19) Europäisches Patentamt
European Patent Office
Office européen des brevets

(11) Veröffentlichungsnummer: **0 290 910 B1**

(12) **EUROPÄISCHE PATENTSCHRIFT**

(45) Veröffentlichungstag der Patentschrift: **23.06.93**

(51) Int. Cl.$^5$: **C08G 73/10**

(21) Anmeldenummer: **88107017.1**

(22) Anmeldetag: **02.05.88**

Die Akte enthält technische Angaben, die nach dem Eingang der Anmeldung eingereicht wurden und die nicht in dieser Patentschrift enthalten sind.

# (54) Spezielle Polyimide als Thermoplaste.

(30) Priorität: **13.05.87 DE 3715890**

(43) Veröffentlichungstag der Anmeldung:
**17.11.88 Patentblatt 88/46**

(45) Bekanntmachung des Hinweises auf die Patenterteilung:
**23.06.93 Patentblatt 93/25**

(84) Benannte Vertragsstaaten:
**DE FR GB IT**

(56) Entgegenhaltungen:

**PATENT ABSTRACTS OF JAPAN, Band 10, Nr. 230 (C-365)[2286], 9. August 1986; & JP-A-61 64 730 (SUMITOMO BAKELITE CO., LTD) 03-04-1986**

**PATENT ABSTRACTS OF JAPAN, Band 10, Nr. 350 (C-387)[2406], 26. November 1986; & JP-A-61 151 237 (UBE IND LTD) 09-07-1986**

**PATENT ABSTRACTS OF JAPAN, Band 11, Nr. 89 (C-411)[2536], 19. März 1987; & JP-A-61 241 360 (NITTO ELECTRIC IND CO., LTD) 27-10-1986**

**WO 87/00845**

**Elias/Vohwinkel "Neue Polymere Werkstoffe für die industrielle Anwendung", Seiten 257-262**

(73) Patentinhaber: **BAYER AG**

**W-5090 Leverkusen 1 Bayerwerk(DE)**

(72) Erfinder: **Zecher, Wilfried, Dr.**
**Treptowerstrasse 6**
**W-5090 Leverkusen(DE)**
Erfinder: **Arlt, Dieter, Prof. Dr.**
**Rybnikerstrasse 2**
**W-5000 Köln 80(DE)**
Erfinder: **El Sayed, Aziz, Dr.**
**Saarlauternerstrasse 39**
**W-5090 Leverkusen(DE)**

EP 0 290 910 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue spezielle Polyimide, deren Herstellung und die Verwendung als Thermoplaste.

Polyimide werden z.B. durch Umsetzung von Pyromellitsäuredianhydrid mit 4,4′-Diaminodiphenylether erhalten (DBP 1 202 981) und finden insbesondere als temperaturbeständige Folien und Formkörper Verwendung. Ein Nachteil dieser Polyimide besteht darin, daß die Verformung über die Polyamidsäure aus dem Lösungsmittel erfolgen muß, da die Polyimide in fast allen Lösungsmitteln unlöslich sind, und daß diese Materialien nicht thermoplastisch sind.

Aus der WO 87/00 845 sind thermoplastiche verarbeitbare Polyimide bekannt, die in der Säurekomponente 2.2-Propanstrukturen, z.B. 2,2-Bis-(4-aminophenoxyphenyl)-propan, aufweisen. Jedoch tragen diese mindestens eine Trifluormethylgruppe, welche bekanntlich nur aufwendig herzustellen ist.

Es wurde nun gefunden, daß man thermoplastische Polyimid-Harze erhält, wenn 2,2-Bis-phthalsäureanhydrido-(4)-propan mit 2,2-Bis-[4-aminophenoxyphenyl]-propan bei Temperaturen von 0 bis 400 °C, vorzugsweise von 10 bis 250 °C, und vorzugsweise in einem Lösungsmittel zur Umsetzung gebracht wird, wobei gegebenenfalls weitere Diamine, Säuren oder Säureanhydride zugegeben werden können.

Gegenstand der Erfindung sind thermoplastische Polyimide aus 2,2-Bis-phthalsäureanhydrido-(4)-propan (I) und 2,-Bis-[4-aminophenoxyphenyl]-propan (II) und gegebenenfalls jeweils 2 bis 70 Val-%, bezogen jeweils auf die Säure (I) und das Amin (II), weiteren Diaminen und Tetra-,Tri- oder Dicarbonsäuren oder deren Anhydriden.

Die Eigenschaften der erfindungsgemäßen Polyimide sind als überraschend zu bezeichnen, da im allgemeinen die Reaktionsprodukte aus Tetracarbonsäuredianhydriden und aromatischen Diaminen bei der Imidisierung aus den eingesetzten Lösungsmitteln, z.B. N-Methylpyrrolidon, als quallige oder feste Massen ausfallen und dann in technischem Maße überhaupt nicht mehr verarbeitet werden können oder zu Materialien mit einem erheblichen Abfall der Produkteigenschaften, z.B. der Elastizität, führen. Hingegen bilden die erfindungsgemäßen Polyimide nicht nur in aprotischen Lösungsmitteln wie N-Methylpyrrolidon und Dimethylacetamid, sondern auch in weniger polaren Lösungsmitteln stabile Lösungen und können in dieser Phase auskondensiert und dann aufgearbeitet werden.

Ein weiterer Vorteil besteht darin, daß die erfindungsgemäßen Materialien thermoplastisch sind und daher im Eindampfextruder aufgearbeitet und weiterhin auch im Spritzguß verarbeitet werden können oder nach Extrusionsverfahren zu Folien verarbeitet werden können.

Als erfindungsgemäßes Tetracarbonsäuredianhydrid wird das 2,2-Bis-phthalsäureanhydrido-(4)propan (I) eingesetzt,

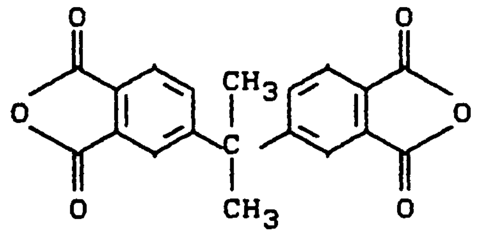

(I)

das z.B. durch Oxidation von 2,2-Bis-[1,2-dimethylphenyl-(4)-]-propan zugänglich ist. Anstelle des Säureanhydrids können auch Derivate wie die Alkyl- oder Arylhalbester, Alkyl- oder Aryl-ester, Amide oder die freie Tetracarbonsäure eingesetzt werden.

Als erfindungsgemäßes Diamin wird das 2,2-Bis-[4-aminophenoxyphenyl]-propan(II) zur Umsetzung gebracht,

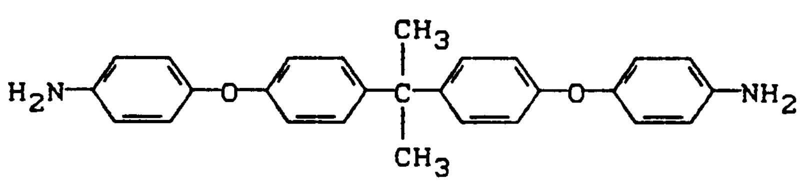

(II)

das weiterhin z.B. mit Alkyl oder Halogen substituiert sein kann. Anstelle des Diamins können auch Derivate wie z.B. die Acetyl-Verbindungen, Isocyanate oder Carbamidsäureester für die erfindungsgemäße Reaktion eingesetzt werden.

Das erfindungsgemäße Diamin kann z.B. durch katalytische Hydrierung von 2,2-Bis-[4-nitrophenoxyphenyl]-propan hergestellt werden.

Zur Regulierung des Molekulargewichts können z.B. monofunktionelle Carbonsäuren wie Essigsäure, Laurinsäure, Stearinsäure, Benzoesäure und Phenylessigsäure, monofunktionelle Säureanhydride wie Phthalsäureanhydrid, Tetrachlorphthalsäureanhydrid, Phenylphthalsäureanhydrid und Hexahydrophthalsäureanhydrid und monofunktionelle Amine wie Butylamin, Dodecylamin, Octadecylamin, Cyclohexylamin, Benzylamin, Anilin und Dodecylanilin, deren Derivate und Gemische eingesetzt werden.

Die erfindungsgemäße Reaktion kann in Schmelze oder vorzugsweise in Lösungsmitteln ausgeführt werden. Geeignete Lösungsmittel sind (Halogen)-kohlenwasserstoffe, Phenole, Alkohole, Ester, Lactone, Ketone, Ether, Nitrile, Amide, Sulfoxide und Sulfone, z.B. Nitrobenzol, Chlorbenzol, o-Dichlorbenzol, Methylenchlorid, Trichlorethylen, Pyridin, Phenol, o-, m-, p-Kresol, Caprolacton, Acetophenon, Cyclohexanon, Diethylenglykoldimethylether, Benzonitril, Dimethylacetamid, Caprolactam, N-Methylcaprolactam, N-Methylpyrrolidon, N-Cyclohexylpyrrolidon, Dimethylsulfon und Tetramethylensulfon oder deren Gemische.

Zur Herstellung der erfindungsgemäßen Polyimide werden die Reaktionskomponenten mit oder ohne Lösungsmittel einige Minuten bis zu mehreren Stunden bei Temperaturen von 0 bis 400 °C gehalten. Der Verlauf der Reaktion läßt sich beispielsweise über die IR-Spektren und die Abspaltung von Wasser verfolgen.

Die Reaktion kann auch kontinuierlich ausgeführt werden.

Als besonders geeignet haben sich erfindungsgemäße Polyimide mit einer relativen Viskosität, gemessen an einer 1 %igen Lösung in m-Kresol bei 25 °C, von 1,0 bis 4,0, vorzugsweise von 1,5 bis 2,2, erwiesen.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann die in erster Stufe entstehende Polyamidsäure bei Temperaturen um 20 °C hergestellt und dann bei höheren Temperaturen, gegebenenfalls unter Vakuum oder azeotroper Destillation, in das Polyimid übergeführt werden. Weiterhin kann die Imidisierung auch durch andere geeignete Verfahren, wie auf chemischem Wege z.B. durch Einwirkung von Essigsäureanhydrid oder von Essigsäureanhydrid und Pyriden oder von Carbodiimiden durchgeführt werden.

Eine bevorzugte Ausführungsform besteht darin, das Polyimid oder die Polyamidsäure in einem Lösungsmittel herzustellen, bereits im Kessel zu einer noch fließfähigen Lösung oder einem Schmelzharz aufzukonzentrieren und die restlichen Lösungsmittel, gegebenenfalls unter Nachkondensation und Imidisierung, in einem Eindampfextruder, gegebenenfalls unter Vakuum, bei Temperaturen von 250 bis 400 °C, vorzugsweise von 300 bis 360 °C, auszudampfen.

Nach einer weiteren Ausführungsform wird das Polyimid in einem Lösungsmittel hergestellt und durch Fällung, mit einem Nichtlöser, z.B. mit Wasser oder Methanol, aufgearbeitet.

Im allgemeinen wird pro Val Säureanhydrid ein Val Amin zur Umsetzung gebracht, doch sind auch weitgehende Abweichungen von diesen Mengenverhältnissen möglich.

Weitere mögliche Ausführungsformen bestehen darin, das erfindungsgemäße Bis-phthalsäureanhydridpropan mit geeigneten Tetracarbonsäuredianhydriden, Tri- oder Dicarbonsäuren und das erfindungsgemäße Bis-[aminophenoxyphenyl]-propan mit geeigneten Diaminen abzumischen.

Die Mengenverhältnisse werden so gewählt, daß die erhaltenen Polymere noch ohne Zersetzung thermoplastisch verarbeitet werden können. Dabei beträgt der Anteil dieser Polycarbonsäuren 2 bis 70 Val-% und der Anteil an Diaminen ebenfalls 2 bis 70 Val-%, bezogen auf die erfindungsgemäßen Säureanhydride und Amine.

Geeignete Polycarbonsäuren sind z.B. Pyromellitsäuredianhydrid, Diphenyltetracarbonsäuredianhydrid, Benzophenontetracarbonsäuredianhydrid, Cyclopentantetracarbonsäuredianhydrid, Trimellitsäureanhydrid, Terephthalsäure, Isophthalsäure, Adipinsäure, Azelainsäure und Sebazinsäure, Geeignete Diamine sind z.B. 1,6-Diaminohexan, 1,12-Diaminododecan, 1,3- und 1,4-Diaminocyclohexan, m- und p-Phenylendiamin, Bis-[4-aminocyclohexyl]-methan und Amine der allgemeinen Formel (III)

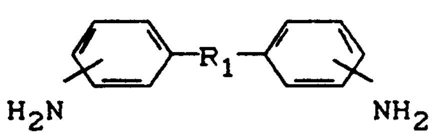,

(III)

in der $R_1$ z.B. die Reste

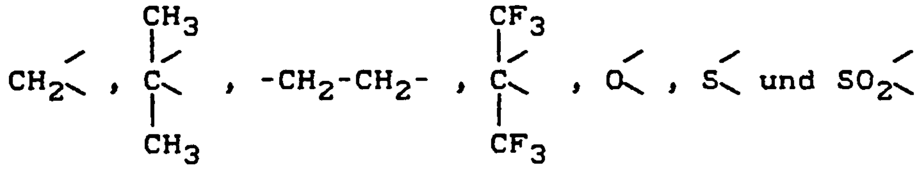

bedeutet und die weiter mit Halogen und Alkyl-Resten substituiert sein können. Bevorzugt werden zur Abmischung 4,4'-Diaminodiphenylether und m-Phenylendiamin eingesetzt.

Die Herstellung der erfindungsgemäßen Polymeren kann durch Katalysatoren beeinflußt werden, z.B. durch Amine wie Triethylamin, 1,4-Diazabicyclo-(2,2,2)-octan, 2-Methylimidazol und Pyridin, durch anorganische und organische Metallverbindungen wie Verbindungen des Eisens, Bleis, Zinks, Zinns, Kupfers, Kobalts, Nickels und Titans, z.B. Kobaltacetat, Bleioxid, Dibutylzinndilaurat, Kupferacetylacetonat, Nickelacetat, Alkaliphenolate und Natriumcyanid, durch Bor-Derivate wie Borsäure und durch Phsophorverbindungen wie Trialkylphosphin, Methylphospholinoxid, Triphenylphosphit, Triphenylphosphat und Polyphosphorsäure. Bevorzugt werden Pyridin, Borsäure, Triphenylphosphit und Triphenylphosphat verwendet.

Die erfindungsgemäßen Thermoplaste zeichnen sich durch besondere E-Moduli und Wärmeformbeständigkeit aus. Ihre Eigenschaften können für die verschiedenen Anwendungsgebiete durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern und weiteren Polymeren variiert werden.

Die erfindungsgemäßen Polyimide können weiterhin nach (Blas)Extrusionsverfahren zu Folien verarbeitet werden.

In den Versuchsbeispielen werden nachfolgende Abkürzungen verwendet:

BPAP 2,2-Bis-phthalsäureanhydrido-(4)-propan

BAPP 2,2-Bis-[4-aminophenoxyphenyl]-propan

Die relative Viskosität wird, falls nicht anders angegeben, an einprozentigen Lösungen in m-Kresol bei 25 °C gemessen.

Beispiel 1

In 430 g N-Methylpyrrolidon werden 80,36 g 2,2-Bis-[4-aminophenoxyphenyl]-propan (BAPP) und 1,48 g Dodecylamin gelöst. Dann werden unter Kühlung bei 15 bis 20 °C 67,2 g 2,2-Bis-phthalsäureanhydrido-(4)-propan (BPAP) eingetragen. Die Lösung wird noch 6 Stunden bei Raumtemperatur gerührt. Dann werden 250 g Toluol zugegeben, ein Veresterungsaufsatz aufgesetzt und die Temperatur bis zum Rückfluß gesteigert. Das im Verlaufe der Reaktion gebildete Wasser wird im Verlaufe von ca. 3 Stunden azeotrop abdestilliert und über den Veresterungsaufsatz abgetrennt. Anschließend wird der Veresterungsaufsatz gegen eine Destillationsbrücke ausgetauscht und das Toluol abdestilliert. Das Reaktionsgemisch wird noch ca. 6 Stunden bei 180 °C gerührt, wobei mehrmals bis zur beginnenden Destillation Vakuum angelegt wird. Man erhält eine hellbraune viskose Lösung des Polyimids, die in Methanol eingetropft wird. Das Polyimid fällt in Form farbloser Kügelchen aus, die abgetrennt und im Vakuum getrocknet werden. Dabei wird die Temperatur, bei 50 °C beginnend, stufenweise bis auf 200 °C gesteigert. Die relative Viskosität einer 1 %igen Lösung des Polyimids in N-Methylpyrrolidon bei 25 °C beträgt $\eta_{rel.}$ = 1,58. Eine Lösung in Methylenchlorid zeigt im IR-Spektrum bei 1725 und 1785 $cm^{-1}$ die für Imide charakteristischen Banden. Eine Probe des Harzes wird bei 280 °C und einem Druck von 200 bar zu einem hellbraunen Formkörper verpreßt.

Beispiel 2

In 260 g N-Cyclohexylpyrrolidon werden 40,18 g BAPP und 0,74 g Dodecylamin gelöst. Dann werden bei 15 bis 20 °C 33,6 g BPAP eingetragen und noch 3 Stunden bei dieser Temperatur gerührt. Anschließend wird unter Wasserstrahlvakuum im Verlaufe von 6 Stunden die Temperatur auf 160 °C gesteigert und die Reaktion unter Rückfluß in ca. 3 Stunden zu Ende geführt. Man erhält eine viskose Lösung des Polyimids, die mit Dimethylacetamid verdünnt und dann in Methanol eingetropft wird. Das Polyimid fällt in Form weißer Kügelchen aus. Die relative Viskosität beträgt

$$\eta^{25}_{rel.} = 1,71,$$

gemessen bei 25 °C an einer 1 %igen Lösung in m-Kresol.

Eine Probe des so hergestellten Polyimids wird bei 300 °C zu einem elastischen Formkörper verpreßt. Die Differentialthermoanalyse ergibt eine Glastemperatur von 224 °C.

Beispiel 3

Die Reaktion wird unter den Bedingungen von Beispiel 2, jedoch in 300 g Tetramethylensulfon als Lösungsmittel, ausgeführt. Die Fällung in Methanol ergibt ein farbloses Polyimid mit einer relativen Viskosität von

$$\eta^{25}_{rel.} = 1,87,$$

gemessen an einer 1 %igen Lösung in m-Kresol.

Beispiel 4

In 1.700 g m-Kresol 70, einem technischen Gemisch aus 70 % m- und 30 % p-Kresol, werden 321,4 g BAPP und 5,92 g Dodecylamin gelöst. Dann werden unter Kühlung bei 15 bis 20 °C 268,8 BPAP eingetragen.

Man erhält eine viskose Lösung, die noch 4 Stunden bei Raumtemperatur und dann jeweils 2 Stunden bei 120, 150, 180 und 190 °C gerührt wird. Zur Entfernung von Wasser wird im Verlaufe der Reaktion mehrmals unter Vakuum andestilliert. Das Reaktionsgemisch wird abgekühlt, mit 2 kg Methylenchlorid verdünnt und in Methanol gefällt. Das Fällungsprodukt wird getrocknet, in Dimethylacetamid gelöst und nochmals in Methanol gefällt. Man erhält das Polyimid in Form weißer Kügelchen, die im Wasserstrahlvakuum bei langsam bis 200 °C ansteigender Temperatur getrocknet werden. Die relative Viskosität einer 1 %igen Lösung in m-Kresol beträgt

$$\eta^{25}_{rel.} = 1,62.$$

Die Verarbeitung des so hergestellten Polyimids im Spritzgußverfahren bei Temperaturen um 340 °C ergibt transparente Prüfkörper mit einer Biegefestigkeit von 160 MPa, einem E-Modul (Biegung) von 3.100 MPa und einer Erweichungstemperatur von Vicat B = 220 °C.

Beispiel 5

In 3.500 g m-Kresol werden 642,8 g BAPP, 11,84 g Dodecylamin und 537,6 g BPAP entsprechend den Reaktionsbedingungen von Beispiel 4 zur Umsetzung gebracht. Man erhält eine hellbraune Lösung des Polyimids mit einem Festgehalt von ca. 25 Gew.-% und einer Viskosität

$$\eta^{25}_{rel.} = 68.400\ mPas.$$

Die so hergestellte Polyimid-Lösung wird in einem ZSK-Eindampfextruder bei einer maximalen Manteltemperatur von 330 °C und einem Druck von 10 mbar aufkonzentriert. Man erhält ein transparentes, elastisches Harz mit einer relativen Viskosität

$$\eta^{25}_{rel.} = 1,62,$$

gemessen an einer 1 %igen Lösung in m-Kresol.

$C_{46}H_{34}N_2O_6$ (710)

| | C | H | N |
|---|---|---|---|
| ber. | 77,8 | 4,8 | 3,9 |
| gef. | 77,4 | 5,1 | 3,8 |

Beispiel 6

In einem Rührkolben mit Veresterungsaufsatz werden in 300 g Chlorbenzol 40,18 g BAPP und 0,74 g Dodecylamin gelöst. Dann werden bei Raumtemperatur 33,6 g BPAP eingetragen und das Reaktionsgemisch noch 6 Stunden bei Raumtemperatur gerührt. Danach wird 7 Stunden auf Rückflußtemperatur erhitzt. Das im Verlaufe der Reaktion gebildete Wasser wird im Veresterungsaufsatz abgeschieden. Das Reaktionsprodukt, eine klare, viskose Lösung, wird nach dem Erkalten mit Dimethylacetamid verdünnt und in Acetonitril eingetropft. Man erhält das Polyimid in Form weißer Perlen mit einer relativen Viskosität

$$\eta^{25}_{rel.} = 1,92.$$

Eine Probe des Polyimids wird bei 290°C und einem Druck von 200 bar zu einer klaren elastischen Scheibe verpreßt.

Beispiel 7

Entsprechend Beispiel 6 werden in 300 g o-Dichlorbenzol 40,18 g BAPP, 0,74 g Dodecylamin und 33,6 g BPAP zur Umsetzung gebracht. Die Fällung der mit Dimethyacetamid verdünnten Polyimid-Lösung erfolgt in Methanol. Die Lösungsviskosität des Reaktionsprodukts beträgt, gemessen in m-Kresol,

$$\eta^{25}_{rel.} = 1,94.$$

Beispiel 8

In 450 g m-Kresol werden 40,18 g BAPP, 10,58 g m-Phenylendiamin und 0,74 g Anilin gelöst. Dann werden bei 15 bis 20°C 67,2 g BPAP eingetragen. Das Gemisch geht bei Raumtemperatur im Verlaufe von 6 Stunden in eine hochviskose Lösung über. Anschließend wird an einem bei 140°C gehaltenen Rückflußkühler 6 Stunden zum Rückfluß erhitzt.

Das Reaktionsgemisch wird abgekühlt, im Verhältnis 1:1 mit Methylenchlorid verdünnt und in Methanol gefällt. Man erhält das Polyimid in Form weißer Kügelchen. Die Lösungsviskosität beträgt

$$\eta^{25}_{rel.} = 1,85.$$

Eine Probe des Harzes wird bei 300°C und 200 bar zu einem klaren elastischen Formkörper verpreßt.

Beispiel 9

Entsprechend Beispiel 8 werden in 560 g m-Kresol 80,36 g BAPP, 0,74 g Anilin und 67,2 g BPAP zur Umsetzung gebracht. Man erhält eine ca. 20 %ige Lösung des Polyimids in Kresol, deren Viskosität 318.000 mPas beträgt. Die Lösung wird mit Methylenchlorid verdünnt und das Polyimid durch Eintropfen in

Methanol gefällt. Die Lösungsviskosität des Polyimids beträgt, gemessen an einer einprozentigen Lösung in m-Kresol,

$$\eta_{rel.}^{25} = 2,01.$$

**Patentansprüche**

1. Thermoplastische Polyimide aus 2,2-Bis-phthalsäureanhydrido-(4)-propan (I) und 2,-Bis-[4-aminophenoxyphenyl]-propan (II) und gegebenenfalls jeweils 2 bis 70 Val-%, bezogen jeweils auf die Säure (I) und das Amin (II), weiteren Diaminen und Tetra-,Tri- oder Dicarbonsäuren oder deren Anhydriden.

2. Verfahren zur Herstellung von Polyimiden nach Anspruch 1, dadurch gekennzeichnet, daß die Polyimide in einer ersten Stufe nach einem bekannten Verfahren in einem Lösungsmittel hergestellt und dann in einem Eindampfextruder bei Temperaturen von 250 bis 400 °C, gegebenenfalls unter Vakuum, aufkonzentriert und gegebenenfalls auskondensiert werden.

3. Verfahren nach Anspruch 2, dadurch gekennzeichnet, daß die Polyimide in einer ersten Stufe nach einem bekannten Verfahren in einem Lösungsmittel hergestellt und dann mit einem Nichtlöser ausgefällt werden.

4. Verfahren nach Anspruch 2, dadurch gekennzeichnet, daß das 2,2-Bis-phthalsäureanhydrido-(4)-propan (I) mit 2 bis 70 Val-%, bezogen auf (I), anderen Tetra-, Tri- oder Dicarbonsäuren oder deren Anhydriden und/oder das 2,2-Bis-[4-aminophenoxyphenyl]-propan (II) mit 2 bis 70 Val-%, bezogen auf (II), anderen Diaminen zur Herstellung der Polyimide abgemischt wird.

5. Verwendung der Polyimide gemäß Anspruch 1 zur Herstellung von Folien nach (Blas)-Extrusionsverfahren.

**Claims**

1. Thermoplastic polyimides of 2,2-bis-phthalic anhydrido-(4)-propane (I) and 2,2-bis-[4-aminophenoxyphenyl]-propane (II) and optionally 2 to 70 val. %, based on the acid (I) and the amine (II), of other diamines and tetra-, tri- or dicarboxylic acids or anhydrides thereof.

2. A process for the production of the polyimides claimed in claim 1, characterized in that the polyimides are first produced in known manner in a solvent and are then concentrated, optionally in vacuo, at temperatures of 250 to 400 °C and optionally condensed to completion in an evaporation extruder.

3. A process as claimed in claim 2, characterized in that the polyimides are first produced in known manner in a solvent and are then precipitated with a non-solvent.

4. A process as claimed in claim 2, characterized in that, to produce the polyimides, the 2,2-bis-phthalic anhydrido-(4)-propane (I) is mixed with 2 to 70 val. %, based on (I), of other tetra-, tri- or dicarboxylic acids or anhydrides thereof and/or the 2,2-bis-[4-aminophenoxyphenyl]-propane (II) is mixed with 2 to 70 val. %, based on (II), of other diamines.

5. The use of the polyimides claimed in claim 1 for the production of films by extrusion (blow moulding).

**Revendications**

1. Polyimides thermoplastiques de dianhydride d'acide 4,4'-propylidène-bis(orthophtalique) (I) et de 2,2-bis(4-aminophénoxyphényl)-propane (II) et, le cas échéant, de 2 à 70 éq.% chaque fois d'autres diamines et d'autres acides tétra-, tri- et dicarboxyliques ou leurs anhydrides, par rapport à l'acide (I) et à la diamine (II), respectivement.

2. Procédé de préparation de polyimides selon la revendication 1, caractérisé en ce que les polyimides sont préparés au cours d'une première étape dans un solvant selon un procédé connu et ensuite concentrés dans une extrudeuse évaporatrice à des températures comprises entre 250 et 400 °C, le cas échéant sous vide, et, si nécessaire, concentrés.

3. Procédé selon la revendication 2, caractérisé en ce qu'on prépare les polyimides au cours d'une première étape dans un solvant selon un procédé connu, et qu'ensuite on les fait précipiter dans un non-solvant.

4. Procédé selon la revendication 2, caractérisé en ce qu'on mélange, pour la préparation des polyimides, l'anhydride d'acide 4,4'-propylidène-bis(orthophtalique) (I) avec de 2 à 70 éq.% d'autres tétra-, tri- ou diacides carboxyliques ou leurs anhydrides par rapport à (I) et/ou le 2,2-bis-(4-aminophénoxyphényl)-propane (II) avec de 2 à 70 éq.% d'autres diamines par rapport à (II).

5. Utilisation des polyimides selon la revendication 1 pour la préparation de feuilles en utilisant des procédés d'extrusion (-soufflage).